# EUROPÄISCHE PATENTSCHRIFT

(11) **EP 0 385 290 B1**
(45) Veröffentlichungstag und Bekanntmachung des Hinweises auf die Patenterteilung: **18.01.1995**
(21) Anmeldenummer: 90103516.2
(22) Anmeldetag: 23.02.1990
(51) Int. Cl.: G07F 7/10, G06K 19/06

(54) **Verfahren und Vorrichtung zur Vereinfachung des Gebrauchs einer Vielzahl von Kreditkarten u. dgl.**
Method and device to simplify the use of a plurality of credit cards and the like
Dispositif et méthode pour simplifier l'utilisation d'un ensemble de cartes de crédit et similaires

(30) Priorität: 01.03.1989 DE 3906349
(43) Veröffentlichungstag der Anmeldung: 05.09.1990
(73) Patentinhaber: Hennige, Hartmut, Kirk Ella, Hull HU10 7TH, N. Humberside (GB)
(72) Erfinder: Hennige, Hartmut, Kirk Ella, Hull HU10 7TH, N. Humberside (GB)
(74) Vertreter: Otte, Peter, Dipl.-Ing.

(56) Entgegenhaltungen:
- EP-A- 0 197 535
- EP-A- 0 203 683
- DE-A- 3 809 028
- DE-U- 8 707 546
- DE-U- 8 902 378
- FR-A- 2 603 404
- GB-A- 2 201 125
- US-A- 4 443 027
- US-A- 4 683 372
- US-A- 4 742 215
- US-A- 4 797 542

## Beschreibung

### Stand der Technik

Die Erfindung geht aus von einem Verfahren und einer Multifunktionskarte nach dem Oberbegriff des Anspruchs 1 bzw. des Anspruchs 12.

Bei einem bekannten IC-Kartenbenutzungssystem wird die gegenseitige Geheimhaltung von Informationen, die in einer IC-Karte von mehreren Ausstellern gespeichert ist, dadurch gewährleistet, daß der Speicher der IC-Karte in eine Vielzahl von diskreten Bereichen unterteilt ist und jeder Bereich nur mittels vorgegebener unterschiedlicher Identifizierungscodes zugänglich ist (DE-A-3 809 028).

Hierzu muß ein Terminal verwendet werden, welches in der Lage ist, einen Identifizierungscode in den Bereich des Kartenspeichers nur dann einzuschreiben, wenn es einen Eingabecode erhält, der mit dem Ausstellercode übereinstimmt, der vorher in diesem Bereich des Speichers gespeichert worden ist.

Dabei ist ferner von Bedeutung, daß es sich bei dieser IC-Karte um eine Einrichtung handelt, die von einem Benutzer verwendet, jedoch von mehreren Parteien gemeinsam mit Kreditinformationen versehen ist, die in den erwähnten unterschiedlichen Bereichen des Speichers niedergelegt sind. Dabei ist sichergestellt, daß jeder einzelne Aussteller immer nur an die Informationen herankommt, die von ihm selbst stammen, so daß also die anderen Informationen sonstiger Aussteller auch dann nicht zugänglich sind, wenn er die gemeinsame IC-Karte in ein spezielles Terminal einlegt, welches dazu bestimmt ist, aus der IC-Karte die gewünschten Informationen, die beispielsweise Bankkonteninformationen oder Kreditkonteninformationen sein können, auszulesen bzw. was ebenfalls ein wesentlicher Gesichtspunkt ist, stets anschließend andere Informationen in den jeweiligen isolierten Speicherbereich einzuschreiben.

Um an die Informationen heranzukommen, ist daher ein geheimer Identifizierungscode des Ausstellers sowie ein geheimer Identifizierungscode des Benutzers der Karte erforderlich. Nur wenn diese beiden Identifizierungsocdes oder Kennworte vorliegen, läßt sich die IC-Karte benutzen.

Dieses bekannte IC-Kartenbenutzungssystem entsprechend DE-A-38 09 028 enthält keine Angaben über Art, Aufbau und Aussehen der jeweiligen IC-Karte bzw. deren Präsentation nach außen: es ist noch nicht einmal angegeben, wie eine Lese/Schreibeinheit eines bestimmten Ausstellerterminals in der Lage ist, mit dem jeweiligen Speicherbereich in Kontakt zu treten. Eine Bedienung durch den Benutzer allein ist offensichtlich nicht beabsichtigt, da ein Zugriff zu den gespeicherten Informationen oder Daten überhaupt nur dann möglich ist, wenn über das spezielle Terminal mit Leseeinrichtung und Schreibeinrichtung der IC-Karte auch der Ausstellercode ermittelt worden ist. Sobald dieser Ausstellercode und ein Benutzer-Identifizierungscode eingegeben sind, kann der Benutzer dann Zugriff zu den gespeicherten Daten nehmen und es ist ferner möglich, durch die Schreibeinrichtung auch in den Kartenspeicher der IC-Karte einzuschreiben. Auf diese Weise gelingt es, einen hohen Grad an Geheimhaltung der von den Ausstellern jeweils stammenden Informationen untereinander zu erzielen. Bei diesen bekannten IC-Kartenbenutzungssystemen handelt es sich daher auf jeden Fall um solche IC-Karten, deren Speicherinhalt bei jeder Benutzung eine Veränderung erfährt, im Gegensatz zu den in vielfältigsten Formen bekannten Kreditkarten, die als Möglichkeit zum bargeldlosen Einkauf, aber auch für sonstige Zwecke als Scheckkarten, Kundenkarten u.dgl. verwendet werden und die neben Namen, Bezeichnung und Logo des ausstellenden Instituts, Verfalldatum eine spezielle Kundennummer sowie die Unterschrift des Karteninhabers tragen. Es handelt sich aber um diese Art von Kreditkarten, die derzeit im Begriff steht, sich in nahezu allen Ländern der Erde in immer größerer Vielfalt und Anzahl auszubreiten und dem einzelnen Verbraucher zur Verfügung gestellt zu werden, auf die sich die vorliegende Erfindung bezieht. Es ist üblich, solche Karten, die in ihren Abmessungen eine genormte äußere Form aufweisen, Verbrauchern für die verschiedensten Verwendungszwecke in Form sogenannter Einzweckkarten zur Verfügung zu stellen, die dann jeweils nur eine Funktion erfüllen, etwa für den Betrieb von Mietwagen, die Erledigung von Bankgeschäften, zur Begleichung von Reisekosten, als Tankstellen-Bedienungskarte, als Karte zum Bezahlen von Verzehr, in Kaufhäusern u.dgl. Also abgesehen davon, daß es für die gleichen Zwecke eine Vielzahl von unterschiedlichen Kreditkarten gibt, die, wie jedermann bekannt, auf unterschiedliche Kartenausgeber zurückgehen (American Express, VISA, Diners Club usf.), gibt es auch noch eine Vielzahl von Spezial- oder Einzweckkarten, so daß es nicht selten ist, daß bestimmte Verbraucher oder Verbrauchergruppen, beispielsweise in solchen Ländern, in denen Karten schon seit längerer Zeit Verwendung finden wie in den Vereinigten Staaten oder auch in England, eine große Anzahl solcher Karten in ihrem Besitz haben. So verfügt in den Vereinigten Staaten ein Durchschnittsbürger schon über mehr als 16 Karten, während in Großbritannien etwa 8 Karten dem Durchschnittsbürger zur Verfügung stehen, mit erheblichen Steigerungsmöglichkeiten nicht nur in diesen Ländern, sondern weltweit.

Dies ist nicht nur aus Gründen der Bequemlichkeit problematisch, denn sehr häufig werden tatsächlich eine größere Anzahl von Karten benötigt und ständig mitgeführt und verwendet, sondern kann auch Sicherheitsfragen betreffen, denn wenn jemand eine größere Anzahl solcher Karten mit sich herumträgt, auf denen im übrigen auch noch deutlich die Unterschrift des Karteninhabers erkennbar ist, dann ist schließlich die Gefahr eines Verlustes oder einer Fälschung naheliegend. Tatsächlich sind im übrigen die heute gebräuchlichsten Karten vergleichsweise leicht fälschbar, so daß die Verluste, die durch solche gefälschten oder mißbräuchlich benutzten Karten entstehen, schon jetzt extrem hoch sind und in Zukunft noch wesentlich größer werden dürften.

Abgesehen also von der Problematik, eine Vielzahl solcher Karten entweder ständig mit sich herumtragen zu müssen oder im ungeeigneten Moment feststellen zu müssen, daß man gerade die Karte, die man jetzt benötigt, nicht mit sich trägt, stellt auch der Verlust bzw. Mißbrauch solcher Karten ein ständig größer werdendes Problem dar.

Eine weitere bekannte Multifunktionskarte (US-A-4 797 542) soll es dem Kartenbenutzer ermöglichen, die Karte für eine Anzahl von unterschiedlichen Anwendungsfällen einzusetzen, die beispielsweise als Kaufen auf Kredit, als Realisierung von Bankgeschäften, als Reservierung von Flügen oder auch als Hotelzimmerreservierungen angegeben sind. Um die Karte für diese verschiedenen Möglichkeiten einzusetzen, ist eine äußere Betätigungstaste vorgesehen, bei deren Betätigung aufeinanderfolgend die verschiedenen Anwendungsmöglichkeiten angezeigt werden können, so daß der Benutzer die Karte auf einen bestimmten Anwendungsfall einstellen kann.

Ferner ist eine weitere Betätigungstaste vorgesehen, mit welcher schon getätigte Anwendungsfälle oder Transaktionen (history call-up) nochmals aufgerufen und überprüft werden können. Eine solche Karte ermöglicht es daher, ähnlich wie bei einem Personalcomputer, in dem einen Anzeigefenster verschiedene Vorgänge sichtbar zu machen, entweder um sich daran zu erinnern (history) oder um diese Karte für verschiedene Anwendungsfälle, also wie erwähnt Buchen von Flügen oder Hotelzimmern, Kaufen auf Kredit u. dgl. freizuschalten. Hierzu verfügt die Karte auch über äußere elektrische Anschlußkontaktmittel, über welche Eingangssignale aufgenommen und in einem karteneigenen Speicher auch gespeichert werden können. Dabei ist ferner die Eingabe eines die Karte in ihren Grundfunktionen aktivierenden Geheimcodes möglich, der auf den Benutzer bezogen ist und als persönliche Identifizierungszahl bezeichnet ist.

Ein weiteres bekanntes IC-Kartensystem (US-A 4 742 215) definiert ferner im Kartenspeicher unterschiedliche, nämlich segmentierte Bereiche, die beispielsweise jeweils unterschiedlichen Sicherheitsstufen so zugeordnet werden können, daß bestimmte gespeicherte Daten nur bestimmten Personen oder Instituten zugänglich sind, etwa so, daß im Gesundheitswesen spezielle Datenkategorien nur besonderen Personenkreisen, beispielsweise Ärzten oder Apothekern, zugänglich sind. Durch die Definierung unterschiedlicher Sicherheitszonen ist es daher möglich, spezielle, einer Geheimhaltung zu unterwerfende Daten oder Informationen gegen nichtbefugte Personenkreisen auszuschließen, d.h. mit anderen Worten, unterschiedliche Zugriffsrechte zu definieren.

Die Eingabe entsprechender, nur eingeschrängt zugänglicher Daten, die als sogenannter Personalisierungsvorgang bezeichnet wird, kann dabei auch durch Laden entsprechender Dateien von Massenspeichern wie Festplatten, Disketten u. dgl. in den Kartenspeicher erfolgen.

Es ist ferner auch schon bekannt (DE-GM 87 07 546.6), bei einer elektronischen Einzweck-Scheckkarte die Unterschrift des Karteninhabers geheimzuhalten und erst nach Eingabe einer bestimmten, vom Karteninhaber natürlich geheimzuhaltenden Kennummer auf der Karte sichtbar werden zu lassen. Hierzu wird so vorgegangen, daß ein mechanischer Kontrollstreifen mit der vom Karteninhaber vollzogenen Unterschrift und gegebenenfalls auch mit der Kartennummer hinter einer Blende des zweischaligen Kartengehäuses innen angeordnet wird, wobei die Blende nach Art eines Flüssigkeitskristall-Displays so ausgebildet ist, daß sie bei geeigneter Ansteuerung und Polarisierung nach Eingabe der geheimen Kennummer transparent und daher Kartennummer und Unterschrift im Fenster sichtbar werden. Die entsprechende Manipulation an dieser Einzweck-Scheckkarte kann von dem Karteninhaber zu jeder Zeit durchgeführt werden.

Mit einer solchen Maßnahme vergleichbar ist die Anordnung eines druckempfindlichen Schreibbereichs auf einer Smart-Card (GB-A-2 201 125) zur Erfassung der Unterschrift. Die Korrektheit der Unterschrift wird durch karteninternen Vergleich mit einer gespeicherten Unterschrift geprüft. Ähnliche Möglichkeiten der Unterschrifts-Verifizierung sind auch aus der EP-A-197 535 bekannt.

Im Gegensatz dazu liegt der Erfindung die Aufgabe zugrunde, in den Kartenwirrwar der vielen Einzelkarten Ordnung hineinzubringen und trotz Beibehaltung der angebotenen Möglichkeiten, eine im Grunde unbegrenzte Anzahl von Einzweckkarten beliebiger Firmen, Behörden, Institute oder sonstiger Kartenaussteller zu besitzen und auch zu benutzen, nur noch eine einzige Karte in Form einer Multifunktionskarte zu benötigen und mitzunehmen, deren Sicherheitsaspekte andererseits so hoch sind, daß auch bei Verlust weder Mißbrauch noch irgendwelche Fälschungsmöglichkeiten bestehen und auch bei Einsatz sehr hoher technologischer Mittel auf der Fälscher- bzw. Mißbrauchsseite ausgeschlossen werden können.

### Vorteile der Erfindung

Die Erfindung löst diese Aufgabe mit den kennzeichnenden Merkmalen des Anspruchs 1 bzw. des Anspruchs 12 und hat den Vorteil, daß praktisch unabhängig davon, wieviele Karten in welcher beliebigen Form und für welchen speziellen Verwendungszweck, auch Ausweise u.dgl. der Inhaber aller dieser Karten im Besitz hat und auch verwenden möchte, nur eine einzige, im folgenden als Multifunktionskarte bezeichnete Karte erforderlich ist, die im aktivierten Zustand in der Lage ist, vom Kartenbenutzer selbst durch Manipulation von außen, üblicherweise also durch eine geeignete Tastenbetätigung in jede beliebige Einzweckkarte umgewandelt zu werden, also deren Aussehen und Funktion anzunehmen.

Eine solche Multifunktionskarte ist daher eine Elektronische Karte oder Computerkarte, die nicht nur die Kenndaten einer gegebenen Einzweckkarte in elektronischer Form gespeichert enthält, sondern Datensätze sämtlicher von einer gegebenen Person verwendeter und benutzter Karten enthält, wobei es problemlos durch eine entsprechende Manipulation von außen möglich ist, diese eine multifunktionelle Karte in die jeweils gewünschte Karte praktisch in dem Moment umzuwandeln, zu welchem diese benötigt wird.

Der Vorgang ist hierbei vergleichsweise unkompliziert, denn die Anordnung auch sehr umfangreicher elektronischer Speicher in einem kartenähnlichen, sehr flachen Gehäuse mit mindestens einem oder mehreren Sichtfenstern ist technologisch problemlos möglich und wird heute im übrigen schon in Form sogenannter Scheckkartenrechner praktiziert, die zur Wahrnehmung von Rechenaufgaben eher einfacher Art nur noch die Größe und nur eine, die Dicke üblicher Scheck- oder Kreditkarten kaum überschreitende Dicke aufweisen und ferner über ein die Rechenergebnisse anzeigendes Flüssigkristall-Anzeigefenster verfügen (Display-Mittel).

Die Möglichkeit der Verfügbarkeit nur einer einzigen elektronischen Multifunktionskarte, in welcher der jeweilige Anwender, auch nach und nach falls gewünscht, die Daten aller seiner sonstigen Karten übertragen kann und dann eben nur noch diese eine elektronische Multifunktionskarte mit sich führt, stellt eine erhebliche Erleichterung für den einzelnen Anwender dar und hat mit Bezug auf Fälschungssicherheit und generellen Mißbrauch enorme Vorteile.

Besonders die Fälschungssicherheit unterliegt einer doppelten Sicherung, indem nämlich die persönliche Unterschrift des Kartenträgers nur dann auf der Karte im jeweiligen Sichtfenster aus dem elektronischen Speicher, in welchem sie niedergelegt ist, sichtbar reproduziert wird, wenn der Kartenträger nach Eingabe eines Geheimcodes die Karte aktiviert und zur Benutzung durch Auswahl, also Aufrufen des Datensatzes eines bestimmten Instituts (Kreditkartenfirma o. dgl.) vorbereitet hat. Die persönliche Unterschrift erscheint vorteilhafterweise im übrigen erst dann, wenn die elektronische Karte in ein spezielles Prüfterminal bei der jeweiligen Stelle, also Kaufhaus, Restaurant o. dgl. eingelegt und, was nach der Eingabe des Geheimcodes durch den Träger möglich ist, zur Anzeige abgerufen wird. In Verbindung mit diesem Prüfterminal kann dann gleichzeitig ein Belegdrucker in Funktion gesetzt werden, der die Kostenrechnung ausdruckt, die dann, wie dies heute schon üblich ist, von dem Kartenträger unterzeichnet wird. In diesem Moment findet dann auch der Vergleich der Unterschriften statt.

Zusätzlich zu dieser Unterschriftsicherung wird durch den Geheimcode auch die allgemeine mißbräuchliche Verwendung der elektronischen Multifunktionskarte sicher gesperrt, da hier problemlos bekannte Verriegelungsmittel eingesetzt werden können, die nach einer vorgegebenen Anzahl von Versuchen bei weiteren Versuchen zur Ermittlung des richtigen Geheimcodes die Karte zunächst für vorgegebene Zeit sperren und bei Überschreiten einer vorgegebenen Maximalanzahl dann gegebenenfalls vollständig unbrauchbar machen, also sämtliche Daten löschen. Ferner kann ein Finder nicht wissen, ob eine Karte überhaupt noch einen Inhalt hat, der ohne Kenntnis des Geheimcodes auch nicht zugänglich ist.

Die Erfindung sichert so eine besonders einfache Möglichkeit, mit einer einzigen elektronischen Multifunktionskarte allen denkbaren Benutzer- und Anwendungswünschen Rechnung zu tragen, bei optimalen Sicherheitsvoraussetzungen.

Durch die in den Unteransprüchen aufgeführten Maßnahmen sind vorteilhafte Weiterbildungen und Verbesserungen der Erfindung möglich. Besonders vorteilhaft ist die einfache Form der elektronischen Multifunktionskarte, die mit den äußeren Abmessungen üblicher Kredit- oder Scheckkarten ein oder mehrere Sichtfenster hat, die nach Abruf durch Betätigung von Tasten auf der Multifunktionskarte jeweils eines vorgegebenen Datensatzes diese Anzeigefelder füllt, sich hierdurch in eine Einzweckkarte umwandelt und nach Gebrauch abgeschaltet wird oder sich entweder selbst nach einer vorgegebenen Zeit abschaltet und dann problemlos durch Abrufen anderer Datensätze in jeweils andere Einzweckkarten umgewandelt werden kann, wobei dann immer die entsprechenden Firmenangaben und das Logo der ausgebenden Kreditkartenfirma oder der Bank, die Kartennummer und das Verfalldatum, gespeicherte Paßbilder falls gewünscht, sonstige, auch maschinenlesbare Daten sowie auch die Unterschrift des Anwenders produziert werden.

Die Multifunktionskarte enthält zur bleibenden Aufrechterhaltung der gespeicherten Datensätze einen kleinen Akku, der beispielsweise bei jedem Gebrauch, etwa bei Einlegen in ein Prüfterminal einen Ladeschub erhält. Alternativ oder ergänzend hierzu kann die Multifunktionskarte mittels Einsatzes von Solarzellen betrieben werden, die dann auch den Akku laden können.

### Zeichnung

Ausführungsbeispiele der Erfindung sind in der Zeichnung dargestellt und werden in der nachfolgenden Beschreibung näher erläutert. Es zeigen:
- Fig. 1: unten eine mögliche Ausführungsform einer elektronischen multifunktionellen Karte mit Anzeigefenstern und (verdeckten) Tipptasten und im Bild oben die Umwandlung in die Form einer Einzweckkarte als eine der Möglichkeiten aus vielen, entsprechend den gespeicherten Datensätzen;
- Fig. 2: eine mögliche Ablaufsform zur Übernahme der Daten einer größeren Anzahl von Einzelkarten beliebiger Herkunft in die Multifunktionskarte und anschließend die Auswertung der Multifunktionskarte mittels eines Prüf- und Druckterminals;
- Fig. 3: die mögliche Ausführungsform eines Übertragungsgeräts (Mastergerät), mit dessen Hilfe die einzelnen Datensätze der Ausgangseinzweckkarten auf die Multifunktionskarte übertragen werden und
- Fig. 4: eine mögliche Ausführungsform eines Prüfterminals, vorzugsweise kombiniert mit einem Belegdrucker.

### Beschreibung der Ausführungsbeispiele

Der Grundgedanke vorliegender Erfindung besteht darin, eine mit einem elektronischen Gedächtnis ausgestattete elektronische Multifunktionskarte zu schaffen, die eine Vielzahl von Datensätzen von Originalkreditkarten, Scheckkarten, Ausweisen u. dgl. enthält und die so ausgebildet ist, daß entsprechend einer selektiven Eingabe die Multifunktionskarte mit ihren freien Anzeigefeldern immer jeweils die Daten eines Datensatzes jetzt einer bestimmten Kreditkarte oder Scheckkarte o. dgl. anzeigt und dann auch einer beliebigen und insoweit auch üblichen Verwendung zugänglich ist. Ein Anwender braucht dann nur noch diese eine Multifunktionskarte mit sich zu tragen, die in der nichtaktivierten Position eine neutrale Elektronische Karte ist und bei der auf Tastendruck in dem oder den Datenfenstern das Logo der Kartenausgabefirma, das Photo des Trägers, dessen Unterschrift und sonstige hierzu gehörende Daten sichtbar dargestellt werden.

Eine solche Multifunktionskarte kann darüber hinaus auch noch eine Vielzahl weiterer Funktionen übernehmen, beispielsweise zu allgemeinen Identifizierungszwecken, als Führerschein, Personalausweis, Klubkarte, Karten zur Zeiterfassung, Zutrittskontrolle, Tankdatenkarten sowie zur Bargeldautomation - alle diese Funktionen können mit einem einzigen elektronischen Multifunktionsausweis sicherer und effizienter gehandhabt werden.

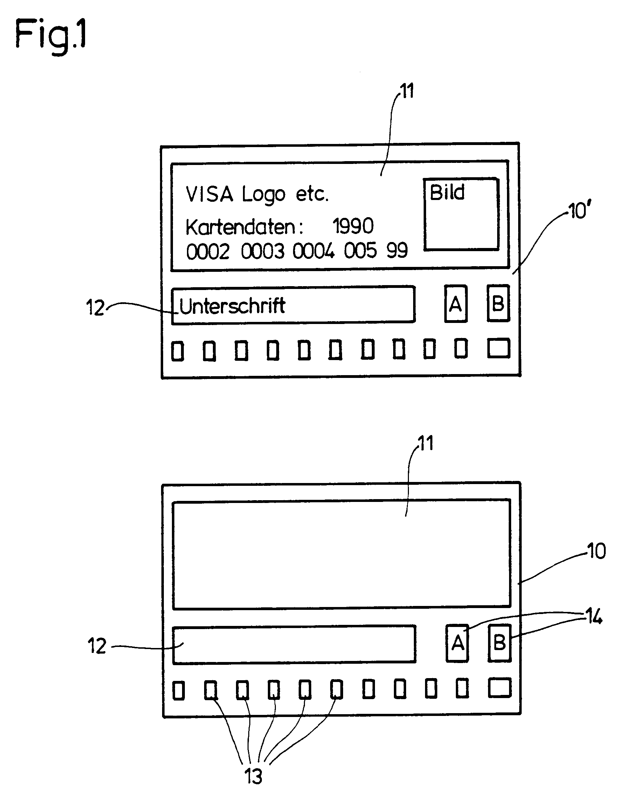

In Fig. 1 ist bei 10 eine denkbare Ausführungsform einer elektronischen Multifunktionskarte dargestellt; die Karte verfügt über ein erstes, beispielsweise größeres Sichtfenster 11 und ein weiteres Sichtfenster 12, die zur Anzeige von zunächst beliebigen Zahlen, Formen, Buchstaben u. dgl. geeignet sind, beispielsweise in der üblichen Ausbildung in Form von Flüssigkristall-Anzeigefeldern u. dgl. Hier können natürlich alle anderen denkbaren und sich nach dem jeweiligen Stand der Technologie erschließenden Anzeigeformen ebenfalls Verwendung finden, wie sie heute zum Teil schon möglich sind, beispielsweise also auch farbige Darstellungen etwa von Paßbildern oder Logos der diese Karten ausgebenden Firmen u. dgl. Solche farbigen Darstellungen von Logos können für Kartenfirmen sehr wichtig sein, so daß beispielsweise diese Bereiche farbig dargestellt und die anderen Daten monochrom angezeigt werden können.

Ferner verfügt eine solche elektronische Multifunktionskarte über eine Vielzahl von Eingabetasten 13, wobei auch noch separate Eingabetasten 14 zum Abruf besonderer Funktionen verfügbar sein können.

Eine solche Karte stellt in der nichtaktivierten Form entsprechend der unteren Darstellung in Fig. 1 sozusagen ein unbeschriebenes Blatt dar; sie verfügt aber über die üblichen elektronischen Schaltungsmittel, wie sie heute gang und gäbe sind, beispielsweise also über Mikroprozessor- oder Rechnereigenschaften, also Taktgeber, Ablaufsteuerungen, insbesondere auch einen problemlos auch sehr umfassend auslegbaren elektronischen Speicher u. dgl. Ferner können in vorteilhafter Weise äußere, in der Zeichnung der Fig. 1 nicht dargestellte mechanische Kotakte noch vorgesehen sein, die sich für die Kommunikation mit einem Prüfterminal oder mit dem Mastergerät als sinnvoll erweisen. Hier ist es aber auch möglich, Daten einzuführen oder abzufragen mit Hilfe von kontaktlosen Mitteln, also etwa induktiv, aber auch seriell mittels photoelektrischer Elemente u. dgl. Es versteht sich ferner, daß mindestens ein elektrischer Energiespeicher, beispielsweise übliche Knopfzellen als Akkumulatoren und falls gewünscht auch ein Reservespeicher zur Aufrechterhaltung der Daten bei Erschöpfung eines Hauptakkus vorgesehen sind.

Die Grundüberlegung bei vorliegender Erfindung besteht jetzt darin, daß in eine solche elektronische Multifunktionskarte aufeinanderfolgend die Datensätze von beliebigen Einzelkarten beliebiger Kreditausgabefirmen, Scheckkarten, Kundenkarten, Ausweise u. dgl. übertragen werden können, wobei dann bestimmte Speicherplätze von jedem Datensatz besetzt werden und auch separat durch entsprechende, von außen herangetragene Adressierungen wieder abgefragt werden können,beispielsweise durch sukzessive Drucktastenbetätigung.

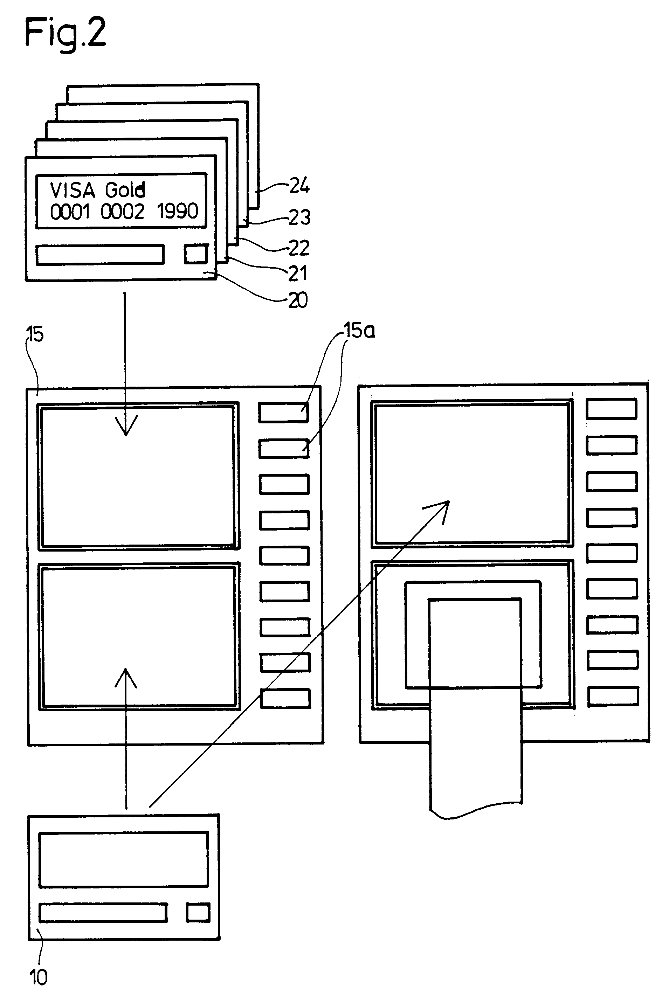

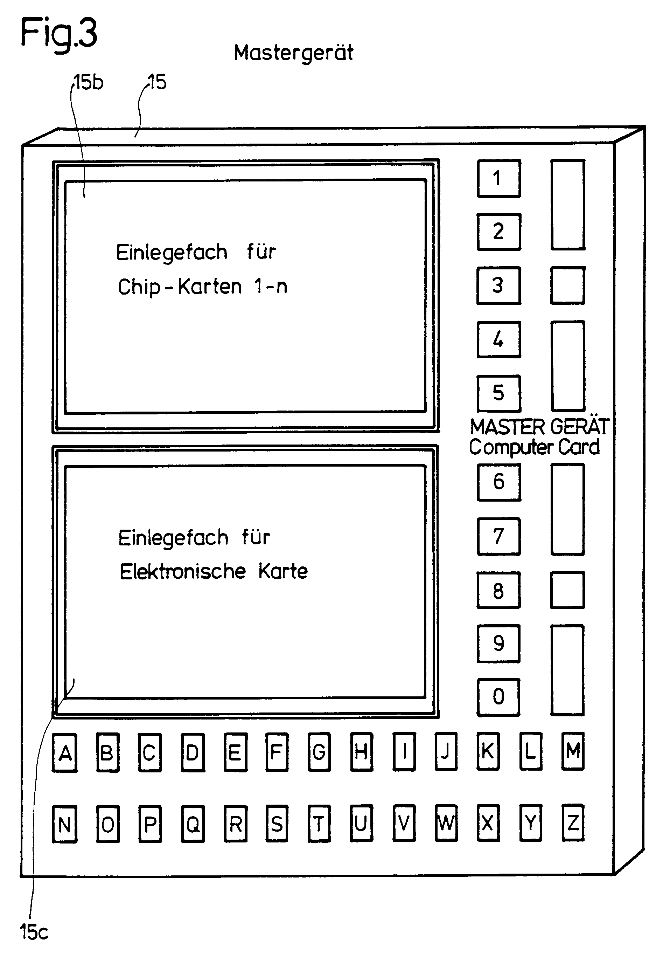

Eine erste Möglichkeit für eine solche Datenübernahme besteht darin, daß unter Zugrundelegung eines Mastergeräts 15 entsprechend Fig. 3 eine Datenübergabe stattfindet, wie dies in Fig. 2 gezeigt ist. In Fig. 2 sind beliebige bekannte Einzweckkarten, die Kreditkarten 20, 21, 22 oder Scheckkarten 23 oder Ausweise 24 usf. darstellen können, angegeben und im übrigen so ausgebildet - was heutzutage schon für sich gesehen bekannt ist, daß in diesen Karten 20, 21, 22 ... ein Computerchip oder ein sonstiger elektronischer Speicher mit einigem zusätzlichen elektronischen Schaltungsaufbau integriert ist.

In diesem Chip sind dann zusätzlich zu dem Erscheinungsbild dieser bekannten Karten alle wichtigen Kartendaten sowie die Unterschrift des Anwenders und sein Paßphoto zusammen mit dem Logo der Kartenfirma gespeichert.

Diese gespeicherten Daten können aus dem Chip abgefragt werden, so daß der Benutzer einer Multifunktionskarte seine ihm verfügbaren Einzweckkarten 20, 21, 22 ... nacheinander, wie gezeigt, in sein Mastergerät 15 einlegt, welches, durch eine umfassende, von außen zugängliche Tastatur 15a befähigt, die Daten im Computerchip der einzelnen Einzweckkarte abfragt und als Datensatz auf die ebenfalls eingelegte,elektronische Multifunktionskarte, genauer gesagt in deren Speicher überträgt. Diese erste Möglichkeit der Dateneingabe in die elektronische Multifunktionskarte 10 setzt voraus, daß die Kreditkartenfirmen oder sonstigen Institute, die Scheckkarten ausgeben, wie Banken, Firmen, Behörden, Clubs u. dgl. der neuen Einzweckkartengeneration Computerchips integrieren, was natürlich auch die Anwendungsfähigkeit dieser Karten erheblich verbessern kann.

Hier sind beliebige weitere Möglichkeiten der Dateneingabe in die elektronische Multifunktionskarte denkbar und auch möglich; beispielsweise indem die die Karte jeweils ausgebende Stelle (dies stellvertretend für Kreditkartenfirmen, Banken, Behörden, Institute u.dgl.) dem Anwender nach Erledigung des Antrags u. dgl. oder bei seiner Aufnahme einen Datenträger übersendet, etwa als Floppy, als PROM o. dgl., bei einer entsprechenden Ausbildung des Mastergeräts, so daß dieses den Datenträger abfragen und Daten in die elektronische Multifunktionskarte übertragen kann.

Hier ist es auch denkbar, daß der Besitzer der elektronischen Multifunktionskarte diese dem ausgebenden Institut übersendet oder mit seiner Multifunktionskarte zu einer Agentur geht, so daß dort der Speicher der Multifunktionskarte mit den erforderlichen Daten geladen werden kann.

Diese Datenübergabe kann im übrigen nach und nach von dem Anwender vorgenommen werden, bis dann eben alle seine Karten in jeder beliebigen Form auf die elektronische Karte jeweils in Form eines Datensatzes übertragen sind; der Besitzer braucht dann nur noch die elektronische Multifunktionskarte mit sich zu führen.

Kehrt man jetzt zu der Darstellung der Fig. 1 zurück, dann wird der weitere Ablauf deutlich; beispielsweise durch Betätigen der Tasten A bzw. B - nachdem der Anwender einen persönlichen Geheimcode über die Tasten 13 beispielsweise eingegeben hat, können nacheinander, etwa durch mehrfaches Tippen oder auch durch bestimmte Adresseneingabe, jeweils verschiedene Einzweckkartenformen aufgerufen werden. Wird beispielsweise die Taste A betätigt, dann kann als erstes durch entsprechende Anzeige im Anzeigefeld 11 die Einzweckkarte eines bestimmten Kreditinstituts realisiert werden, hier mit der Bezeichnung "Visa" mit Logo, Kartendaten, Bild des Trägers, falls gewünscht auch mit Unterschrift. Dabei ist die Elektronik der Multifunktionskarte bevorzugt aber so ausgelegt, daß die Unterschrift erst im Bereich eines Prüfterminals sichtbar wird, und zwar im Anzeigefeld oder Display 12.

Auf diese Weise kann man den gesamten Inhalt der Datensätze der elektronischen Multifunktionskarte 10 sozusagen durchblättern, indem bei jeder weiteren Betätigung der Taste A die Angaben, Daten und Logos jeweils anderer Kreditkartenausgeber, Banken u. dgl. in den Anzeigefeldern 11 (und 12) dargestellt werden. Mit anderen Worten, die Multifunktionskarte kann auf Wunsch des Kartenbesitzers immer die Form einer Einzweckkarte annehmen und dann für diesen Zweck auch eingesetzt werden, die der Karteninhaber wünscht und bei deren Kreditkarten-Firmen oder Banken er selbstverständlich Kunde ist.

Auf Tastendruck wird also in dem oder den Datenfenstern der Multifunktionskarte Logo, Adresse und bezeichnete Kartenfirma, gegebenenfalls ein Photo und (später) seine Unterschrift sichtbar dargestellt.

Aufgrund der bereits jetzt verfügbaren Chips und der Neuentwicklungen auf technologischem Gebiet stehen in der Zwischenzeit sehr hohe Speicherkapazitäten zur Verfügung, so daß eine praktisch unbegrenzte sinnvolle Anzahl von Einzweckdaten von der Multifunktionskarte in Form von Datensätzen aufgenommen und verfügbar gehalten werden kann.

Die Anwendung und der Gebrauch einer elektronischen Multifunktionskarte stellt sich daher wie folgt dar:

Zunächst besorgt sich der Anwender, falls nicht schon verfügbar, entsprechende Einzweckkartendaten, indem er seine relevanten Daten beispielsweise in ein Formular einer Bank oder einer Kreditkartenorganisation einträgt und auf diesem Formular auch seine Unterschrift anbringt und ein Paßbild vorlegt.

Sind von der Kartenfirma dann alle Daten überprüft und akzeptiert, dann erhält der Anwender einen Datenträger von der ausgebenden Stelle, der alle notwendigen Daten nach Art des erwähnten Datensatzes erhält.

Dieser Datenträger kann, wie schon erwähnt, entweder eine mit einem Computerchip integrierte normale Einzweckkarte sein, aber auch ein PROM, ein Floppy o. dgl. Dabei umfaßt ein solcher Datensatz mindestens die Daten der Bank bzw. der ausgebenden Stelle, also Logo, Bezeichnung u. dgl. sowie auf den Anwender bezogene Daten wie Kartennummer und Verfalldatum, gespeichertes Paßbild und Unterschrift des Anwenders.

Ferner kann der Anwender, falls er noch nicht über eine elektronische Multifunktionskarte und ein entsprechendes Mastergerät, wie in Fig. 3 gezeigt, verfügt, von der ausgebenden Stelle noch eine solche Multifunktionskarte zusammen mit dem Mastergerät erhalten. Dieses verfügt dann, wie in Fig. 3 gezeigt, über ein Einlegefach 15b für die Computerchip-Einzweckkarten und ein Einlegefach 15c für die elektronische Multifunktionskarte.

Zur Übertragung der Daten vom Datenträger kann dann der Anwender, wenn er eine Chip-Karte von der ausgebenden Stelle erhalten hat, diese in sein Mastergerät im Einlegefach 15b einsetzen, in das andere Fach 15c die Multifunktionskarte einlegen, woraufhin es nach Betätigung entsprechender äußerer Tasten möglich ist, auf den Sichtfeldern der elektronischen Karte die Daten darzustellen und zu überprüfen.

Ist alles in Ordnung, dann bestimmt der Anwender, und nur dieser allein noch eine Geheimnummer, die notwendig ist, um später die elektronische Multifunktionskarte aktivieren zu können. Diese Geheimnummer ist nur dem Anwender bekannt und kann z.B. über das Mastergerät 15 der elektronischen Multifunktionskarte eingegeben werden. Diese Geheimnummer oder allgemeiner ausgedrückt ein solcher Geheimcode ist dann universell gültig, um überhaupt den Zugang zu der Multifunktionskarte zu eröffnen, wobei es sich versteht, daß die einzelnen, auf die verschiedenen Einzweckkarten bezogenen Datensätze entweder durch entsprechende Adressierung mittels eines Codes abgerufen oder beispielsweise wie schon erwähnt durch wiederholtes Tippen von Tasten sozusagen durchgeblättert werden können.

Der Geheimcode ist nur dem Anwender bekannt und kann daher, jedenfalls nicht durch nur einige wenige Versuche, geknackt werden.

Der ursprüngliche Datenträger kann dann an die ausgebende Stelle zurückgegeben werden, beispielsweise die Computerchip-Karte, der PROM oder das Floppy, wobei bei Ausgab einer Chip-Karte als Datenträger diese aber auch von dem Anwender behalten, beispielsweise in seinem Tresor als Zweitkarte für alle Fälle aufbewahrt werden kann.

Will der Anwender dann irgendwo mit seiner Karte bezahlen, dann wird die elektronische Multifunktionskarte, die er als einzige mit sich führt, zunächst durch Eingabe des Geheimcodes aktiviert und anschließend entschieden, welche Kartenorganisation oder welche Bank verwendet werden soll.

Durch Tastendruck werden dann der Reihe nach die jeweils gespeicherten Organisationen wie Visa, Diners, Avis, Shell usw. angezeigt und dann die Karte mit den nunmehr sichtbaren Informationen einschließlich Bild des Anwenders dem Verkäufer oder der die Karte auswertenden Stelle übergeben.

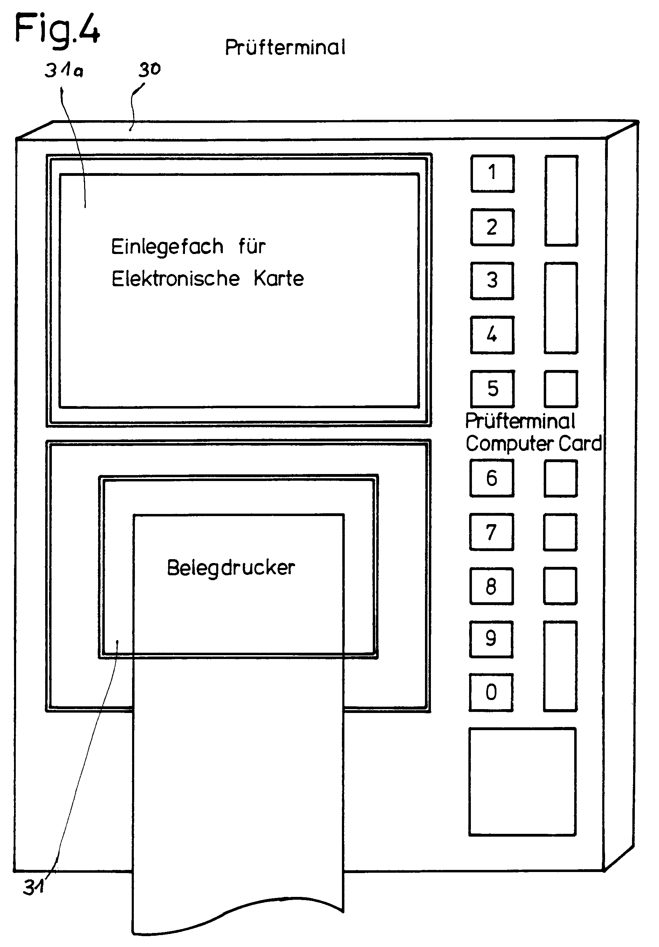

Diese Stelle besitzt dann ihrerseits ein Prüfterminal, welches, wie im übrigen auch das Master-Gerät problemlos und einfach aufgebaut sein kann. Ein solches Prüfterminal ist in Fig. 4 mit 30 bezeichnet. In dessen Einlegefach 31a wird die elektronische Multifunktionskarte mit den angezeigten Daten eingelegt. Erst hierdurch wird dann die Unterschrift des Anwenders in dem Anzeigefeld 12 der Fig. 1 auch sichtbar. Dies ist eine zweckmäßige Ausgestaltung.

Damit der Prüfterminal mit der elektronischen Karte arbeiten kann, kann diese über nach außen weisende kleine Kontakte, etwa im Randbereich verfügen, die dann mechanisch von Kontakten im Einlegefach des Prüfterminals kontaktiert werden, so daß das Prüfterminal nunmehr den Unterschrifts-Aktivierungscode eingeben und die allgemeinen Daten der Kartenorganisation abfragen kann oder diese Kontaktierung geschieht kontaktlos auf für sich gesehen bekannte, beliebige andere Weise, etwa über optische, induktive, kapazitive oder sonstige geeignete Mittel.

Gleichzeitig kann der Prüfterminal dann einen Beleg erzeugen, da zweckmäßigerweise noch ein Belegdrucker 31 vorgesehen und angeschlossen ist, nachdem der Verkäufer die Rechnungsdaten in den Terminal eingegeben hat.

Der Beleg wird dann vom Anwender, wie auch jetzt schon üblich, unterschrieben, wodurch gleichzeitig auch ein Unterschriftenvergleich möglich ist. Dem Anwender wird dann eine Durchschrift des Belegs überlassen.

Die Erfindung ermöglicht eine Vielzahl von Sicherheitsaspekten, die durch sie realisiert werden können und die sicherstellen, daß eine solche elektronische Multifunktionskarte wesentlich besser und sicherer, verglichen mit den heutigen, leicht fälschbaren Kredit- und Bankkarten ist. Dabei ist auch noch von Vorteil, daß die elektronische Multifunktionskarte nicht über einen heute auf normalen Einzweckkarten üblichen Magnetstreifen zu verfügen braucht, der durch Unachtsamkeit in seiner Funktion leicht beeinträchtigt werden kann, so daß seine Daten, etwa durch Magneteinwirkung ganz oder teilweise gelöscht werden.

Die Sicherheitsaspekte vorliegender Erfindung sind wie folgt:
- Der Geheimcode, der auch als PIN-Code bezeichnet werden kann, wird vom Anwender selbst bestimmt und eingegeben - nur der Anwender kennt diesen Code, der in üblicher Weise auch eine Kombination als Zahlen und Buchstaben sein kann.
- Der Geheimcode kann nur dann bestimmt werden, wenn ein Mastergerät entsprechend Fig. 3 verfügbar ist, denn nur das Mastergerät verfügt, wie auch die Fig. 3 zeigt, über Mittel zur Zahleneingabe und zur alphanumerischen Eingabe. Aus Raumgründen kann es sich daher im übrigen als sinnvoll erweisen, die Tasten 13, 14 auf der elektronischen Multifunktionskarte mit Mehrfachfunktionen zu belegen, die durch bestimmte Tasten, beispielsweise mit dem Bezugszeichen 14, jeweils umgestaltet werden.
- Dabei kann das Mastergerät 15 entsprechend Fig. 3 so ausgelegt werden, daß es nur dann funktionstüchtig ist, wenn eine Originalchip-Karte von der ausgebenden Stelle (Kreditkartenfirma, Bank u. dgl.) eingesetzt ist. Der Chip in dieser Karte oder der PROM kann ferner so ausgelegt sein, daß nur eine begrenzte Funktionsdauer vorliegt, d.h. diese Elemente können über eine sogenannte Datumssperre verfügen, so daß die Chip-Karte oder der PROM nach einer vorgegebenen Zeit nicht mehr funktionsfähig sind.
- Ferner kann die Chip-Karte auch so programmiert sein, daß sie nur für eine einmalige Funktion zugelassen ist und sich nach dem ersten Prüfcheck selber aus der Funktion setzt.
- Ein weiterer Sicherheitsaspekt besteht darin, daß die Unterschrift und/oder das Bild des Anwenders von der ausgebenden Stelle in den Chip der Einzweckkarte oder in den PROM eingegeben werden und nur beim Aktivschalten beim ersten Vorgang sichtbar werden, wenn also die Multifunktionskarte geladen wird.
   Ein Finder oder eine Person, die eine solche elektronische Multifunktionskarte bewußt entwendet, verfügt über keine Vorlage für eine Unterschrift, da er den Geheimcode nicht kennt, der die Multifunktionskarte aktiviert.
- Aber selbst wenn es dem Finder oder dem mutwilligen Entwender gelingt, sich in den Besitz des Geheimcodes zu setzen, beispielsweise indem er vorher einmal eine Aktivierung beobachtet hat, kennt er noch immer die Unterschrift nicht, denn Multifunktionskarte und Prüfterminal sind so ausgelegt, daß diese Unterschrift nur bei Einlegen in den Prüfterminal sichtbar wird. Andererseits wird aber der Anwender um den Vollzug der Unterschrift gebeten, wenn er die Karte benutzen will. Erst durch Einlegen in den Prüfterminal 30 entsprechend Fig. 4 wird die Unterschrift sichtbar, die dann mit der von dem Anwender erstellten Unterschrift verglichen wird.
- Ein weiterer Sicherheitsaspekt bei vorliegender Erfindung besteht darin, daß ein Finder überhaupt nicht weiß, ob die Karte noch einen Inhalt hat; er weiß auch nicht, wieviele und welche Logos gespeichert sind oder worum es sich überhaupt handelt.
- Ferner ist die Multifunktionskarte in ihrem elektronischen Bereich so ausgelegt, daß nach einigen Fehlversuchen mit dem Geheimcode die Karte nicht mehr funktionstüchtig ist.
- Es ist außerdem möglich, durch ein Prüfterminal, welches beispielsweise eine direkte on-line Verbindung zu einem zentralen Rechner hat oder über eine "schwarze Liste" entsprechend programmiert ist, die Multifunktionskarte dann, wenn sich dies als notwendig erweist, sofort unbrauchbar zu machen, etwa durch Löschen des Speicherinhalts.

Ein weiterer Gesichtspunkt vorliegender Erfindung besteht darin, daß dann, wenn der Anwender über einen handelsüblichen Computer, beispielsweise ein PC-Gerät verfügt, dieses mittels eines Adapters und entsprechender Software so ausgelegt sein kann, daß die Chip-Einzweckkarte, ein PROM sowie das in Fig. 3 gezeigte Mastergerät entbehrlich sind und mit Hilfe eines solchen Rechners die erforderlichen Datensätze direkt in die Multifunktionskarte übertragen werden können, indem zusammnen mit einer entsprechenden Software diese Daten von einer ausgebenden Stelle, also Bank oder Kreditkartenfirma, auf einer üblichen Diskette dem Anwender ins Haus zugeschickt werden.

Nach dem Einlesen wird dem Anwender dann mittels eines Menüs und einer entsprechenden Bedienerführung exakt vorgegeben, was zu tun ist.

Auch hier kann man dann mit der Tastatur des Computers den Geheimcode eingeben und nachfolgend, falls gewünscht, die Diskette aus Gründen der Sicherheit löschen.

Eine besonders vorteilhafte Ausgestaltung vorliegender Erfindung besteht hinsichtlich der Verifizierung der persönlichen Unterschrift des Anwenders noch darin, daß diese unter Benutzung eines für sich gesehen schon bekannten Verfahrens nicht durch Inaugenscheinnahme des Personals, sondern maschinell/elektronisch durchgeführt wird.

Für diesen Fall vollzieht der Benutzer oder Anwender der Multifunktionskarte seine Unterschrift auf einer geräteeigenen Unterlage, so daß das jeweilige Terminal bzw. dessen logische Rechenschaltung bzw. Computer in der Lage ist, diese Unterschrift aufzunehmen und mit einer gespeicherten Unterschrift zu vergleichen.

Es ist vorteilhaft, wenn sowohl die Speicherung der Unterschrift als auch die Aufnahme der Unterschrift am Terminal sowie der maschinell/elektronische Unterschriftenvergleich in digitalisierter Form durchgeführt wird.

In diesem Zusammenhang ergeben sich dann wieder zwei vorteilhafte Varianten, die darin bestehen, daß die gespeicherte Unterschrift, die also mit der durch den Anwender unmittelbar vollzogenen Unterschrift maschinell/elektronisch verglichen wird, entweder zentral in der oder den Kartenausgabestelle(n) gespeichert sein kann, so daß der Rechner oder Computer im Terminal bei der ohnehin erforderlichen Verifizierung der ihm vorgelegten bzw. eingelegten Karte, beispielsweise auf Kreditwürdigkeit und sonstige Identitätsmerkmale, gleichzeitig auch noch in einem weiteren zusätzlichen Schritt die in der Zentrale zu dieser Karte gespeicherte Unterschrift abruft, die im digital mit allen erforderlichen Charakteristika übermittelt wird.

Sobald dann der Anwender vor dem Terminal die Unterschrift nochmals vollzogen hat, wird digital verglichen, wobei bei diesem Vergleich nicht nur auf die Identität der Unterschriften abgestellt wird, sondern auch auf sonstige Charakteristiken, die hierbei erkennbar sind, also beispielsweise dynamischem Ablauf des Unterschriftsvollzugs, was nicht unbedingt mit der Geschwindigkeit der Unterschriftsleistung gleichzusetzen ist, sondern eine Vielzahl von Charakteristika umfaßt, die sämtlich unter dem Begriff der "gespeicherten Unterschrift" zu verstehen sind.

Die andere Variante besteht dann darin, daß diese Unterschrift des Anwenders, falls gewünscht, zusätzlich zu der digital gespeicherten Unterschrift in der Zentrale, auch im Speicher der Multifunktionskarte digital niedergelegt ist, so daß dann, wenn das Terminal zu einem jeweiligen Zeitpunkt nicht in der Lage ist, die in der Zentrale gespeicherte Unterschrift abzurufen und/oder die Anwendung der Karte in einem Land erfolgt, wo dies aus bestimmten Gründen ohnehin nicht möglich ist, auch auf die in der Multifunktionskarte digital gespeicherte Unterschrift zurückgreifen kann, diese durch Aufrufen eines entsprechenden Geheimcodes aus der Karte selbst abfragt und dann mit der unmittelbar vor dem Terminal vollzogenen Unterschrift vergleicht. Auch in diesem Fall ist das Terminal in der Lage, durch eine einfache Korrekt-Anzeige oder Fehler-Anzeige Übereinstimmung der vollzogenen Unterschrift mit der gespeicherten Unterschrift zu verifizieren.

Hier können noch weitere Sicherungen eingebaut sein; beispielsweise kann das Terminal einen zwei- oder dreimaligen Versuch erlauben - stimmt dann die vollzogene Unterschrift noch nicht mit der gespeicherten (entweder von der Zentrale abgefragten oder aus der Multifunktionskarte gewonnenen) überein, kann der gesamte Inhalt der Multifunktionskarte gelöscht, also zerstört werden.

Es versteht sich, daß im Bereich des Terminals, vor dem eine solche Unterschrift zu vollziehen ist, ein entsprechendes, sensorbestücktes Aufnahmefeld vorhanden sein muß, welches man beispielsweise als Multisensorpad bezeichnen kann, und in entsprechender Korngröße für die Erfassung auch feiner Einzelheiten der Unterschrift Sensoren so verteilt aufweist, daß eine digitale Aufnahme und Weiterverarbeitung der vollzogenen Unterschrift möglich ist.

Um einen Zugang zu der Multifunktionskarte zu haben, sind daher immer mindestens zwei Geheimcodes erforderlich, nämlich einmal der auf jeden Fall dem Anwender zugängliche PIN-Code, mit welchem der Anwender die Karte aktivieren und mittels des mindestens einen vorhandenen Sichtfensters sozusagen durchblättern kann, während der andere Geheimcode der Unterschrifts-Zugangscode ist, der üblicherweise nur durch das Terminal aktivierbar ist, vorausgesetzt, daß die Multifunktionskarte überhaupt den Unterschriftscode gespeichert hat und es nicht von vornherein vorgezogen wird, den Unterschriftsvergleich vollständig gesondert zur Multifunktionskarte durchzuführen, indem die Unterschrift, wie soeben erwähnt, in digitaler Form aus der Zentrale abgefragt wird und mit einer unmittelbar vollzogenen Unterschrift verglichen wird. Die Abfrage in der Zentrale ist dem Terminal-Rechner natürlich möglich, weil dieser durch die Eingabe der Multifunktionskarte deren sonstige Daten erfassen und zur Kommunikation mit der Zentrale ausnutzen kann.

Hier wird im übrigen noch ein Vorteil deutlich, der sich auf der Anwenderseite ergibt - besitzt ein Anwender nämlich eine größere Anzahl von Einzelkarten, die beispielsweise auch durch bestimmte PIN-Codes gesichert sein könnten, dann ist jedenfalls der normale Anwender nur schwer in der Lage, sich sämtliche PIN-Codes für seine Vielzahl von Einzelkarten zu merken, so daß diese Sicherheitsfunktion ohnehin verlorengeht bzw. nicht realisiert werden kann. Es dürfte aber für jeden Anwender kein Problem darstellen, sich den dann einzig noch notwendigen Geheim-Code bzw. PIN-Code zu merken, den er für die Aktivierung und Durchblätterung seiner nur noch einmal vorhandenen Multifunktionskarte benötigt.

Die Erfindung eignet sich auch zum Einsatz als Schlüssel, Meisterschlüssel, Einrichtung zur Ermöglichung eines Zugangs zu Gebäuden, Autos u. dgl.

## Patentansprüche

1. Verfahren zur Vereinfachung des Gebrauchs einer ansonsten größeren Anzahl von Kreditkarten, Scheckkarten, Kundenkarten, Ausweisen, Unterlagen sowie deren Anwendungen, wobei in einer gemeinsamen Multifunktionskarte Daten von mehreren Kartenausstellern in jeweils zugeordneten diskreten Speicherbereichen dadurch gespeichert werden, daß die entsprechenden Daten jeweils gegebener Einzweckkarten in den elektronischen Speicher der Multifunktionskarte übertragen und dort durch einen Geheimcode des Benutzers gesichert werden, durch dessen Eingabe die Multifunktionskarte aktiviert und zur Benutzung freigegeben wird, wobei als Daten auf den jeweiligen Kartenaussteller bezogene Kenndaten, nämlich wenigstens dessen Namen oder Logo, sowie Verfalldatum und Kartennummer der jeweiligen Einzweckkarte, ferner der Name des Karteninhabers im elektronischen Speicher der Multifunktionskarte gespeichert werden, daß die Kenndaten jeweils eines Kartenausstellers selektiv aus dem elektronischen Speicher durch manuelles Betätigen äußerer Schaltmittel der Multifunktionskarte durch den Benutzer aufeinanderfolgend abgerufen werden, wobei diese Kenndaten aufeinanderfolgend nach außen sichtbar in mindestens einem frei belegbaren Anzeigenfeld der Multifunktionskarte dargestellt werden, und wobei
die zum Zeitpunkt der Kartenbenutzung persönlich vollzogene Unterschrift des Benutzers mit einer in einer Zentrale und/oder im Speicher der Multifunktionskarte gespeicherten Unterschrift verglichen wird, wobei entweder die im elektronischen Speicher der Multifunktionskarte gespeicherte Unterschrift in einem zweiten Anzeigenfeld (12) der Multifunktionskarte dargestellt und durch Inaugenscheinnahme mit der tatsächlich vollzogenen Unterschrift des Anwenders verglichen wird oder die mit der vom Benutzer direkt vollzogenen Unterschrift zu vergleichende gespeicherte Unterschrift in der Multifunkticnskarte oder in einer oder mehreren Zentralen von Kartenausstellern analog oder digital gespeichert ist und von dem Prüfterminal, in welche die Multifunktionskarte nach Aktivierung eingelegt wird, zusammen mit anderen Daten abgefragt und anschließend mit der vollzogenen Unterschrift durch Inaugenscheinnahme oder maschinell digital verglichen wird.

2. Verfahren nach Anspruch 1, dadurch gekennzeichnet, daß die im Speicher der Multifunktionskarte selbst analog oder digital gespeicherte Unterschrift dann in dem zugeordneten Anzeigefenster (12) der Multifunktionskarte zum optischen Vergleich durch Inaugenscheinnahme durch Personal sichtbar gemacht wird, wenn die in das Prüfterminal eingelegte Multifunktionskarte durch Zuführung eines Unterschriften-Geheimcodes aktiviert wird.

3. Verfahren nach Anspruch 2, dadurch gekennzeichnet, daß die im Speicher der Multifunktionskarte gespeicherte persönliche Unterschrift des Anwenders vom Prüfterminal abgefragt und mit einer vor ihm auf einem entsprechenden Sensorfeld unmittelbar vollzogenen Unterschrift maschinell/digital verglichen wird.

4. Verfahren nach einem der vorstehenden Ansprüche, dadurch gekennzeichnet, daß die Kenndaten jeweils einer gegebenen Einzweckkarte von einem vom Kartenaussteller herrührenden Datenträger in die Multifunktionskarte übernommen werden, wobei die Multifunktionskarte in ein Übertragungsgerät eingegeben und die Daten in sie eingeschrieben werden.

5. Verfahren nach Anspruch 4, dadurch gekennzeichnet, daß der die Kenndaten des Kartenausstellers enthaltene Datenträger eine normale einen diese Daten speichernden elektronischen Chip umfassende Kreditkarte (Chip-Karte), eine Diskette, ein PROM oder ein sonstiger abfragbarer Speicher ist und zusammen mit der Multifunktionskarte in das Übertragungsgerät eingelegt wird.

6. Verfahren nach Anspruch 5, dadurch gekennzeichnet, daß als Übertragungsgerät ein Mastergerät verwendet wird, welches ein Einlegefach für den Datenträger und ein zweites Einlegefach für die Multifunktionskarte aufweist sowie eine Tastatur mindestens zur Eingabe des Anwender-Geheimcodes.

7. Verfahren nach Anspruch 5, dadurch gekennzeichnet, daß als Übertragungsgerät ein Computer verwendet wird, der mittels eines Adapters die Multifunktionskarte aufnimmt und die als Software (Diskette) vorliegenden Daten auf die Multifunktionskarte überträgt, wobei mit der Computertastatur der Geheimcode des Anwenders ebenfalls eingegeben wird.

8. Verfahren nach einem der vorstehenden Ansprüche, dadurch gekennzeichnet, daß die Multifunktionskarte zur Realisierung jeweils einer gewünschten Einzweckkarte zunächst durch Eingabe des Geheimcodes aktiviert und anschließend in ein Prüfterminal einer diese Karte als Zahlungsmittel oder Ausweis akzeptierenden Stelle eingelegt wird, daß daraufhin automatisch oder durch Abruf auch die Unterschrift des Anwenders in einem Sichtfenster (12) der Multifunktionskarte zur visuellen Inspektion sichtbar gemacht wird und durch Unterschriftsvollzug des Anwenders auf einem dem Prüfterminal zugeordneten Belegdrucker der Abrechnungsvorgang vervollständigt wird, mit gleichzeitiger Kontrolle von vollzogener Unterschrift mit der angezeigten Unterschrift.

9. Verfahren nach Anspruch 8, dadurch gekennzeichnet, daß einem elektrische Energie speichernden Akkumulator in der Multifunktionskarte durch das Einlegen in das Einlegefach des Prüfterminals ein Ladeschub vermittelt wird.

10. Verfahren nach Anspruch 8, dadurch gekennzeichnet, daß im Einlegefach des Prüfterminals die eingelegte Multifunktionskarte durch direkte Kontaktierung von elektrischen Kontakten hinsichtlich der benötigten Daten erfaßt und ausgewertet wird oder diese Kommunikation kontaktlos erfolgt.

11. Verfahren nach Anspruch 8, dadurch gekennzeichnet, daß der Prüfterminal den gesamten gespeicherten Inhalt der Multifunktionskarte im Mißbrauchsfall löscht.

12. Multifunktion Karte zur Durchführung des Verfahrens nach einem der Ansprüche 1-11 zur Vereinfachung des Gebrauchs einer ansonsten größeren Anzahl von Kreditkarten, Scheckkarten, Kundenkarten, Ausweisen, Unterlagen sowie deren Anwendungen, wobei in einer gemeinsamen Multifunktionskarte Daten von mehreren Kartenausstellern in jeweils zugeordneten diskreten Speicherbereichen dadurch gespeichert sind, daß die entsprechenden Daten jeweils gegebener Einzweckkarten (20-24) in den elektronischen Speicher der Multifunktionskarte übertragen und dort durch einen Geheimcode des Benutzers gesichert sind, durch dessen Eingabe die Multifunktionskarte aktiviert und zur Benutzung freigegeben wird und wobei als Daten auf den jeweiligen Kartenaussteller bezogene Kenndaten, nämlich wenigstens dessen Namen oder Logo, Verfalldatum und Kartennummer der jeweiligen Einzweckkarte, sowie ferner der Name des Karteninhabers im elektronischen Speicher der Multifunktionskarte gespeichert sind, und die Kenndaten jeweils eines Kartenausstellers selektiv aus dem elektronischen Speicher durch manuelles Betätigen äußerer Schaltmittel (13, 14) der Multifunktionskarte durch den Benutzer aufeinanderfolgend abgerufen werden, wobei diese Kenndaten aufeinanderfolgend nach außen sichtbar in mindestens einem frei belegbaren Anzeigenfeld (11, 12) der Multifunktionskarte dargestellt sind, und wobei
die zum Zeitpunkt der Kartenbenutzung persönlich vollzogene Unterschrift des Benutzers mit einer in einer Zentrale und/oder im Speicher der Multifunktionskarte gespeicherten Unterschrift verglichen wird, wobei ferner entweder die im elektronischen Speicher der Multifunktionskarte gespeicherte Unterschrift in einem zweiten Anzeigenfeld (12) der Multifunktionskarte dargestellt und durch Inaugenscheinnahme mit der tatsächlich vollzogenen Unterschrift des Anwenders verglichen wird oder die mit der vom Benutzer direkt vollzogenen Unterschrift zu vergleichende gespeicherte Unterschrift in der Multifunkticnskarte oder in einer oder mehreren Zentralen von Kartenausstellern analog oder digital gespeichert ist und von dem Prüfterminal (30), in welche die Multifunktionskarte nach Aktivierung eingelegt wird, zusammen mit anderen Daten abgefragt und anschließend mit der vollzogenen Unterschrift durch Inaugenscheinnahme oder naschinell digital verglichen wird.

13. Multifunktionskarte nach Anspruch 12, dadurch gekennzeichnet, daß zur Aufnahme und späteren Anzeige der einzelnen Kenndaten in der Multifunktionskarte beliebige Datenträger in Form von abfragbaren, einen elektronischen Speicher besitzenden Einzweckkarten (Chip-Karten), Disketten, PROMs o. dgl. in Verbindung mit einem Übertragungsgerät vorgesehen sind, welches ein Aufnahmefach für die Multifunktionskarte aufweist.

14. Multifunktionskarte nach Anspruch 13, dadurch gekennzeichnet, daß das Übertragungsgerät bei Tastenbetätigung von außen die jeweiligen Kenndaten jedes Kartenausstellers in den für alle Datensätze gemeinsamen Speicher der Multifunktionskarte überträgt.

15. Multifunktionskarte nach Anspruch 12, dadurch gekennzeichnet, daß die Multifunktionskarte eine die Aktivierung des Speichers sowie der Grundfunktionen einschließlich Sichtbarmachung von Daten in Anzeigefenstern sperrende Sicherheitsschaltung aufweist, die durch Eingabe eines Anwender-Geheimcodes entriegelbar ist.

16. Multifunktionskarte nach Anspruch 12, dadurch gekennzeichnet, daß die Multifunktionskarte Tasten für das Durchblättern der jeweils einer Einzweckkarte entsprechenden einzelnen Kenndaten sowie Tasten für die Eingabe des Anwender-Geheimcodes umfaßt.

17. Multifunktionskarte nach Anspruch 12, dadurch gekennzeichnet, daß die Multifunktionskarte im Bereich ihrer Rechnersteuerung so ausgebildet ist, daß unter Ausschluß ihrer eigenen Betätigungstasten die Darstellung der Unterschrift des Anwenders ausschließlich nach Eingabe in ein gesondertes Prüfterminal und Aktivierung des Unterschriftsbereichs durch diesen möglich ist.

18. Multifunktionskarte nach Anspruch 17, dadurch gekennzeichnet, daß zur Aktivierung des Unterschriftsbereichs und gleichzeitiger Sichtbarmachung der Unterschrift des Anwenders ein weiterer Geheimcode über zu diesem Zweck kontaktierte Kontaktmittel der Multifunktionskarte im Prüfterminal zuführbar ist.

19. Multifunktionskarte nach Anspruch 17, dadurch gekennzeichnet, daß das Prüfterminal einen Belegdrucker umfaßt für die Unterschriftsleistung des Anwenders.

20. Multifunktionskarte nach Anspruch 15, dadurch gekennzeichnet, daß die auf die Eingabe des Geheimcodes reagierende Verriegelungs- bzw. Sicherheitsschaltung der Multifunktionskarte so ausgebildet ist, daß nach einer vorgegebenen Anzahl vergeblicher Versuche die weitere Annahme von Geheimcode-Versuchseingaben für einen vorgegebenen Zeitraum gestoppt und/oder der gesamte Speicherinhalt gelöscht wird.

21. Multifunktionskarte nach Anspruch 14, dadurch gekennzeichnet, daß lediglich das die jeweiligen Einzeldatensätze in den Speicher der Multifunktionskarte übertragende Übertragungsgerät als Mastergerät oder Computer die Eingabe- oder Schaltungsmittel aufweist, um den Benutzer-Geheimcode in die Multifunktionskarte einzugeben.

22. Multifunktionskarte nach Anspruch 12, dadurch gekennzeichnet, daß bestimmte Angaben wie Logo, Paßbild in den Anzeigefeldern (11, 12) der Multifunktionskarte farbig wiedergegeben sind.

23. Multifunktionskarte nach Anspruch 12, dadurch gekennzeichnet, daß die Multifunktionskarte mindestens einen, vorzugsweise zwei nachladbare Akkumulatoren aufweist, von denen einer ein Sicherheitsakkumulator ist, der bei Erschöpfung, Nachladen und/oder Entnahme des Hauptakkumulators den Speicherinhalt sichert.

24. Multifunktionskarte nach Anspruch 12, dadurch gekennzeichnet, daß die Multifunktionskarte Solarzellen umfaßt, zur Versorgung von Schaltung und Speicher und/oder zum gleichzeitigen Laden des oder der Akkumulatoren.

25. Multifunktionskarte nach Anspruch 17, dadurch gekennzeichnet, daß das Prüfterminal und/oder das Mastergerät eine Ladeeinrichtung haben, die bei Einlegen der Multifunktionskarte deren elektrische Akkumulatoren laden.

26. Multifunktionskarte nach Anspruch 12, dadurch gekennzeichnet, daß zur Aufnahme der elektrischen Verbindung zwischen den Anschlüssen im Mastergerät bzw. im Prüfterminal elektrische Kontakte an der Multifunktionskarte angeordnet sind und/oder kontaktlose, eine elektromagnetische Übertragung von Daten ermöglichende Schaltungsmittel vorgesehen sind.

27. Multifunktionskarte nach Anspruch 26, dadurch gekennzeichnet, daß die kontaktlosen Schaltungsmittel Lichtsender und Lichtempfänger umfassen bzw. induktiv oder kapazitiv arbeiten.

## Claims

1. Process for simplifying the use of an otherwise relatively large number of credit cards, cheque cards, customer cards, identity cards, documents and other applications, wherein data from several card issuers are stored in a common multifunction card in individually assigned discrete memory regions such that the corresponding data of a particular given single-purpose card are transferred to the electronic memory of the multifunction card and are safeguarded there by a secret code of the user, input of which activates the multifunction card and releases it for use, wherein characteristic data relating to the particular card issuer, that is to say the name or logo, and the use-by date and at least its card number of the particular single-purpose card, and furthermore the name of the cardholder are stored as data in the electronic memory of the multifunction card, and the characteristic data of a particular card issuer are called up in succession selectively from the electronic memory by manual operation of an external switching means of the multifunction card by the user, wherein these characteristic data are shown visibly externally in succession in at least one display field, which can be occupied as desired, of the multifunction card, and wherein the signature of the user given personally at the time of use of the card is compared with a signature stored in a central unit and/or in the memory of the multifunction card, and wherein either the signature stored in the electronic memory of the multifunction card is shown in a second display field (12) of the multifunction card and is compared with the signature actually given by the user by inspection, or the stored signature to be compared with the signature given directly by the user is stored in analogue or digital form in the multifunction card or in one or more central units of card issuers and is requested, together with other data, by the inspection terminal into which the multifunction card is inserted after activation and is then compared with the signature given by inspection or mechanically in digital form.

2. Process according to Claim 1, characterized in that the signature stored in analogue or digital form in the memory of the multifunction card itself is rendered visible in the assigned display window (12) of the multifunction card for optical comparison by inspection by staff when the multifunction card inserted into the inspection terminal is activated by supplying a signature secret code.

3. Process according to Claim 2, characterized in that the personal signature of the user stored in the memory of the multifunction card is requested by the inspection terminal and compared mechanically/digitally with a signature given by him directly on a corresponding sensor field.

4. Process according to one of the preceding claims, characterized in that the characteristic data of a particular given single-purpose card are accepted from a data carrier originating from the card issuer into the multifunction card, the multifunction card being introduced into a transfer unit and the data being written into it.

5. Process according to Claim 4, characterized in that the data carrier containing the characteristic data of the card issuer is a normal credit card comprising an electronic chip which stores these data (chip card), a diskette, a PROM or another memory which can be accessed, and is inserted into the transfer unit together with the multifunction card.

6. Process according to Claim 5, characterized in that a master unit which has an insertion compartment for the data carrier and a second insertion compartment for the multifunction card, as well as a keypad at least for input of the user's secret code, is used as the transfer unit.

7. Process according to Claim 5, characterized in that a computer which accommodates the multifunction card by means of an adaptor and which transfers data present as software (diskette) to the multifunction card is used as the transfer unit, the secret code of the user also being entered with the computer keyboard.

8. Process according to one of the preceding claims, characterized in that for realization of in each case a desired single-purpose card, the multifunction card is first activated by input of the secret code and is then inserted into an inspection terminal of a location which accepts this card as a means of payment or identity card, and in that the signature of the user is then rendered visible, automatically or by calling up, for visual inspection in an inspection window (12) of the multifunction card and the billing operation is brought to completion by the signature being given by the user on a voucher printer assigned to the inspection terminal, the signature given being simultaneously checked with the signature displayed.

9. Process according to Claim 8, characterized in that a charge thrust is imparted to an accumulator storing electrical energy in the multifunction card by insertion into the insertion compartment of the inspection terminal.

10. Process according to Claim 8, characterized in that in the insertion compartment of the inspection terminal, the multifunction card inserted is recorded and evaluated in respect of the necessary data by direct contacting of electrical contacts, or this communication is effected in a contactless manner.

11. Process according to Claim 8, characterized in that the inspection terminal deletes the entire stored contents of the multifunction card in the event of misuse.

12. Multifunction card for carrying out the process according to one of Claims 1-11 for simplifying the use of an otherwise relatively large number of credit cards, cheque cards, customer cards, identity cards, documents and other applications, wherein data from several card issuers are stored in a common multifunction card in individually assigned discrete memory regions such that the corresponding data of a particular given single-purpose card (20-24) are transferred to the electronic memory of the multifunction card and are safeguarded there by a secret code of the user, input of which activates the multifunction card and releases it for use, and wherein characteristic data relating to the particular card issuer, that is to say the name or logo, and the use-by date and at least its card number of the particular single-purpose card, and furthermore the name of the cardholder are stored as data in the electronic memory of the multifunction card, and the characteristic data of a particular card issuer are called up in succession selectively from the electronic memory by manual operation of an external switching means (13, 14) of the multifunction card by the user, wherein these characteristic data are shown visibly externally in succession in at least one display field (11, 12), which can be occupied as desired, of the multifunction card, and wherein the signature of the user given personally at the time of use of the card is compared with a signature stored in a central unit and/or in the memory of the multifunction card, and wherein furthermore either the signature stored in the electronic memory of the multifunction card is shown in a second display field (12) of the multifunction card and is compared with the signature actually given by the user by inspection, or the stored signature to be compared with the signature given directly by the user is stored in analogue or digital form in the multifunction card or in one or more central units of card issuers and is requested, together with other data, by the inspection terminal (30) into which the multifunction card is inserted after activation and is then compared with the signature given by inspection or mechanically in digital form.

13. Multifunction card according to Claim 12, characterized in that any desired data carriers in the form of single-purpose cards which can be scanned and have an electronic memory (chip cards), diskettes, PROMs and the like, in association with a transfer unit which has a compartment for accommodating the multifunction card, are provided for accommodation and later display of the individual characteristic data in the multifunction card.

14. Multifunction card according to Claim 13, characterized in that on external operation of keys, the transfer unit transfers the particular characteristic data of each card issuer into the memory, which is common to all data sets of the multifunction card.

15. Multifunction card according to Claim 12, characterized in that the multifunction card has a safety circuit which blocks activation of the memory and the basic functions, including visualization of data in display windows, and which can.be unlocked by input of a user's secret code.

16. Multifunction card according to Claim 12, characterized in that the multifunction card comprises keys for paging through the individual characteristic data corresponding to a particular single-purpose card and keys for input of the user's secret code.

17. Multifunction card according to Claim 12, characterized in that the multifunction card is designed in the region of its computerized control such that, under exclusion of its own operating keys, display of the signature of the use is possible exclusively after insertion into a separate inspection terminal and activation of the signature region by this.

18. Multifunction card according to Claim 17, characterized in that for activation of the signature region and simultaneous visualization of the signature of the user, another secret code can be supplied to the multifunction card in the inspection terminal via a contact means contacted for this purpose.

19. Multifunction card according to Claim 17, characterized in that the inspection terminal comprises a voucher printer for the user to give his signature.

20. Multifunction card according to Claim 15, characterized in that the locking or security circuit of the multifunction card which reacts to input of the secret code is designed such that after a given number of unsuccessful attempts, further acceptance of attempted inputs of the secret code is stopped for a given period of time and/or the entire contents of the memory are deleted.

21. Multifunction card according to Claim 14, characterized in that only the transfer unit, as the master unit or computer, which transfers the particular individual data sets into the memory of the multifunction card has the input or circuit means for input of the user's secret code into the multifunction card.

22. Multifunction card according to Claim 12, characterized in that certain information, such as a logo or passport photograph, is reproduced in colour in the display fields (11, 12) of the multifunction card.

23. Multifunction card according to Claim 12, characterized in that the multifunction card has at least one, preferably two, rechargeable accumulators, one of which is a back-up accumulator which stores the contents of the memory on exhaustion, recharging and/or removal of the main accumulator.

24. Multifunction card according to Claim 12, characterized in that the multifunction card comprises solar cells for supplying the circuit and memory and/or for simultaneous charging of the accumulator or accumulators.

25. Multifunction card according to Claim 17, characterized in that the inspection terminal and/or the master unit have a charging device which charges the electric accumulators of the multifunction card on insertion thereof.

26. Multifunction card according to Claim 12, characterized in that electric contacts are located on the multifunction card for accommodation of the electrical connection between the connections in the master unit or in the inspection terminal and/or a contactless switching means which allows electromagnetic transfer of data is provided.

27. Multifunction card according to claim 26, characterized in that the contactless switching means comprises light emitters and light receivers or operates by induction or capacitance.

## Revendications

1. Procédé pour simplifier l'utilisation de documents correspondant à un grand nombre de cartes de crédit, de cartes bancaires, de cartes clients, de cartes d'identité, de documents et leurs applications, selon lequel dans une carte multifonctions commune on ainsi créé les données de plusieurs émetteurs de carte dans des zones de mémoire séparées qui leurs sont respectivement associées, et en ce que les données correspondantes sont transmises pour les cartes a usage simple, respectif, dans les mémoires électroniques de la carte multifonctions et sont protégées par un code secret de l'utilisateur, dont l'introduction active la carte multifonctions et la libère pour l'utilisation, et comme caractéristiques correspondant aux données de chaque émetteur de carte, à savoir au moins son nom ou son logo ainsi que la date d'expiration et le numéro de la carte à usage simple, respectif, ainsi que le nom du titulaire de la carte sont inscrits dans la mémoire électronique de la carte multifonctions, et les données caractéristiques de chaque fois un émetteur de carte sont appelées sélectivement de la mémoire électronique par actionnement manuel non seulement des moyens de commutation extérieurs de la carte multifonctions par l'utilisateur et ces données caractéristiques apparaissent successivement dans au moins un champ d'affichage fixé librement sur la carte multifonctions, et la signature de l'utilisateur, exécutée personnellement à l'instant de l'utilisation de la carte est comparée à une signature enregistrée dans une centrale et/ou dans la mémoire de la carte multifonctions, et soit la signature inscrite dans la mémoire électronique de la carte multifonctions est affichée dans un second champ d'affichage (12) de la carte multifonctions ou est comparée à vue avec la signature de l'utilisateur, tracée effectivement ou la signature tracée directement par l'utilisateur est comparée à la signature inscrite en mémoire dans la carte multifonctions ou est enregistrée de manière analogique ou numérique dans une ou plusieurs centrales d'émetteurs de cartes et est appliquée par le terminal de contrôle dans laquelle se trouve la carte multifonctions après activation, pour être interrogée avec les autres données et être comparée avec la signature tracée par contrôle visuel ou contrôle numérique à la machine.

2. Procédé selon la revendication 1, caractérisé en ce que la signature enregistrée de manière analogique ou numérique directement dans la mémoire de la carte multifonctions est affichée dans la fenêtre d'affichage correspondante (12) de la carte multifonctions, pour la comparaison optique, par comparaison directe par le personnel, si la carte multifonctions introduite dans le terminal de contrôle a été activée par l'application du code secret du signataire.

3. Procédé selon la revendication 2, caractérisé en ce que la signature personnelle de l'utilisateur, enregistrée dans la mémoire de la carte multifonctions est interrogée par le terminal de contrôle et est comparée de manière numérique, à la machine avec la signature tracée directement sur un champ de capteurs correspondant.

4. Procédé selon l'une des revendications précédentes, caractérisé en ce que les données caractéristiques de chaque fois une carte à usage simple, introduite est assurée dans la carte multifonctions par un support de données provenant de l'émetteur de cartes, la carte multifonctions étant introduite dans un appareil de transmission et les données y sont inscrites.

5. Procédé selon la revendication 4, caractérisé en ce que le support de données contenant les données caractéristiques de l'émetteur de cartes est une carte de credit (carte à puce) normale, comportant une puce électronique enregistrant ces données, une disquette, une mémoire PROM ou une autre mémoire interrogeable et sont inscrites avec la carte multifonctions dans l'appareil de transmission.

6. Procédé selon la revendication 5, caractérisé en ce que l'appareil de transmission est un appareil maître, qui comporte une case d'introduction pour le support de données et une seconde case pour la carte multifonctions ainsi qu'un clavier au moins pour introduire le code secret de l'utilisateur.

7. Procédé selon la revendication 5, caractérisé en ce que l'appareil de transmission est un ordinateur qui reçoit la carte multifonctions par l'intermédiaire d'un adaptateur et transmet les données disponibles sous forme programmée (disquette) de la carte multifonctions, le clavier de l'ordinateur permettant d'introduire le cas échéant le code de secret de l'utilisateur.

8. Procédé selon l'une des revendications précédentes, caractérisé en ce que la carte multifonctions pour réaliser chaque fois une carte à usage simple, souhaité, est tout d'abord activée par l'introduction du code secret puis est placée dans un terminal de contrôle d'un poste qui accepte cette carte comme moyen de paiement ou comme moyen d'identification, puis, automatiquement ou par appel, la signature de l'utilisateur est visualisée dans une fenêtre (12) de la carte multifonctions pour permettre l'inspection à vue et par l'exécution de la signature de l'utilisateur sur une imprimante de documents associée au terminal de contrôle, la phase de paiement est complétée, avec contrôle simultané de la signature ainsi exécutée et de la signature affichée.

9. Procédé selon la revendication 8, caractérisé en ce qu'un accumulateur stockant de l'énergie électrique dans la carte multifonctions établit une impulsion de chargement lorsque la carte multifonctions est placée dans la case d'introduction du terminal de contrôle.

10. Procédé selon la revendication 8, caractérisé en ce que dans la case d'introduction du terminal de contrôle, la carte multifonctions ainsi mise en place est détectée par contact direct des contacts électriques pour connaître les données nécessaires qui sont exploitées et la communication se fait sans contact.

11. Procédé selon la revendication 8, caractérisé en ce que le terminal de contrôle efface l'ensemble du contenu de la carte multifonctions en cas de tentative d'utilisation non autorisée.

12. Carte multifonctions pour la mise en oeuvre du procédé selon l'une des revendications 1 à 11 pour simplifier l'utilisation de documents correspondant a un grand nombre de cartes de crédit, de cartes de paiement, de cartes de client, de cartes d'identité, de documents ainsi que leurs applications, une carte multifonctions commune contenant les données de plusieurs émetteurs de cartes dans des zones de mémoires séparées associées respectivement, et qui sont enregistrées de façon que les données correspondantes de cartes à usage simple (20-24) introduites respectivement, soient transmises à la mémoire électronique de la carte multifonctions pour y être protégées par le code secret de l'utilisateur, et leur introduction active la carte multifonctions et la libère à l'utilisation, et comme données concernant les données caractéristiques relatives à chaque émetteur de cartes à savoir au moins un nom ou un logo, la date d'expiration et le numéro de la carte d'usage simple, respectif, ainsi que le nom du titulaire de la carte sont inscrites dans la mémoire électronique de la carte multifonctions et les données caractéristiques de chaque émetteur de cartes peuvent être appelées sélectivement dans la mémoire électronique par l'actionnement manuel d'un moyen de commutation (13, 14) externe à la carte multifonctions, par l'utilisateur qui peut les appeler successivement, ces données caractéristiques apparaissant successivement à l'extérieur dans au moins un champ d'affichage (11, 12) libre d'occupation de la carte multifonctions et la signature de l'utilisateur exécutée personnellement au moment de l'utilisation de la carte est comparée à la signature enregistrée dans une centrale et/ou dans la mémoire de la carte multifonctions, la signature enregistrée dans la mémoire électronique de la carte multifonctions étant affichée dans un second champ d'affichage (12) de la carte multifonctions pour être comparée à vue avec la signature de l'utilisateur exécutée effectivement ou la signature effectuée directement par l'utilisateur et la signature à comparer dans la carte multifonctions est enregistrée dans une ou plusieurs centrales d'émetteurs de cartes, sous forme analogique ou numérique et le terminal de contrôle (30) dans lequel a été placée la carte multifonctions après activation, demande cette signature en même temps que d'autres données et compare numériquement ou par une inspection visuelle avec la signature effectivement exécutée.

13. Carte multifonctions selon la revendication 12, caractérisée en ce que pour l'enregistrement et l'affichage ultérieur des différentes données caractéristiques dans la carte multifonctions a un support de données quelconque sont prévues sous la forme de cartes à usage simple, interrogeables, ayant une mémoire électronique (carte à puce) de disquettes, de mémoires PROM ou de moyens analogues en liaison avec un appareil de transmission qui comporte un casier de reception pour la carte multifonctions.

14. Carte multifonctions selon la revendication 13, caractérisée en ce que l'appareil de transmission transmet lorsque les touches sont actionnées de l'extérieur, des données caractéristiques respectives de chaque émetteur de cartes dans une mémoire commune à tous les jeux de données de la carte multifonctions.

15. Carte multifonctions selon la revendication 12, caractérisée en ce qu'elle comporte un circuit de sécurité qui bloque l'activation de la mémoire ainsi que des fonctions de base y compris la visualisation des données dans les fenêtres d'affichage, ces circuits de sécurité pouvant se déverrouiller par l'introduction du code secret de l'utilisateur.

16. Carte multifonctions selon la revendication 12, caractérisée en ce qu'elle comprend des touches pour feuilleter les différentes données caractéristiques correspondant aux différentes cartes à usage simple ainsi que les touches pour introduire le code secret de l'utilisateur.

17. Carte multifonctions selon la revendication 12, caractérisée en ce qu'au niveau de sa commande de calculateur elle est réalisée pour qu'à l'exclusion de ses propres touches de commande, l'affichage de la signature de l'utilisateur ne soit possible exclusivement qu'après l'introduction dans un terminal de contrôle particulier et activation de la zone de la signature.

18. Carte multifonctions selon la revendication 17, caractérisée en ce que pour l'activation de la zone de signature et la visualisation simultanée de la signature de l'utilisateur, il faut fournir un autre code commun à un moyen de contact mis en contact à cet effet pour la carte multifonctions dans le terminal de contrôle.

19. Carte multifonctions selon la revendication 17, caractérisée en ce que le terminal de contrôle comprend une imprimante de pièces comptables pour permettre à l'utilisateur de fournir sa signature.

20. Carte multifonctions selon la revendication 15, caractérisée en ce que le circuit de verrouillage ou de sécurité de la carte multifonctions qui réagit à l'introduction du code secret, est conçu pour qu'après un nombre prédéterminé de tentatives vaines, la poursuite de la réception d'introduction d'essais de code secret soit arrêtée pendant un intervalle de temps prédéterminé et/ou que l'ensemble du contenu de la mémoire soit effacé.

21. Carte multifonctions selon la revendication 14, caractérisée en ce qu'uniquement l'appareil de transmission qui transmet les différents jeux de données séparés dans les mémoires de la carte multifonctions est réalisé comme appareil maître ou comme ordinateur qui comprend des moyens d'introduction et de commutation pour introduire le code secret de l'utilisateur dans la carte multifonctions.

22. Carte multifonctions selon la revendication 12, caractérisée en ce que certaines indications telles qu'un logo, une photo d'identité sont reproduites en couleurs dans les champs d'affichage (11, 12) de la carte multifonctions.

23. Carte multifonctions selon la revendication 12, caractérisée en ce qu'elle comporte au moins un accumulateur rechargeable et de préférence deux accumulateurs rechargeables dont l'un est accumulateur de sécurité qui protège le contenu de la mémoire en cas d'épuisement de l'accumulateur, d'une recharge et/ou de l'enlèvement de l'accumulateur principal.

24. Carte multifonctions selon la revendication 12, caractérisée en ce qu'elle comprend des piles solaires pour l'alimentation du circuit et de la mémoire et/ou pour charger simultanément le ou les accumulateurs.

25. Carte multifonctions selon la revendication 17, caractérisée en ce que le terminal de contrôle et/ou l'appareil maître possède une installation de charge qui lorsqu'on introduit la carte multifonctions en charge les accumulateurs électriques.

26. Carte multifonctions selon la revendication 12, caractérisée en ce que pour recevoir la liaison électrique entre les bornes de l'appareil maître ou le terminal de contrôle, se trouvent des contacts électriques sur la carte multifonctions et/ou des moyens de commutation permettant une transmission sans contact, des données par transmission électromagnétique.

27. Carte multifonctions selon la revendication 26, caractérisée en ce que les moyens de commutation sans contact comprennent des photoémetteurs et photorécepteurs ou des moyens inductifs ou capacitifs.
